# EUROPÄISCHE PATENTANMELDUNG

(11) **EP 0 844 121 A2**
(43) Veröffentlichungstag der Anmeldung: **27.05.1998**
(21) Anmeldenummer: 97119227.3
(22) Anmeldetag: 04.11.1997
(51) Int. Cl.: B60J 3/02

(54) **Sonnenblende für Fahrzeuge**

(30) Priorität: 20.11.1996 DE 19647917
(71) Anmelder: BECKER GROUP EUROPE GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine Sonnenblende für Fahrzeuge mit einem Sonnenblendenkörper (1) und einer Gegenlagerachse (9) aus elektrisch nicht leitenden Material, die über zumindest ein elektrisches Kontaktelement verfügt. Es ist vorgesehen, daß das zumindest eine elektrische Kontaktelement als U-förmige Krampe (17) ausgebildet ist, daß die Gegenlagerachse (9) zwei radiale Schlitze (16) aufweist, in welche die Schenkel (20) der sich mit ihrem Steg auf der Gegenlagerachse (9) abstützenden Krampe (17) eingetrieben sind, daß in der Gegenlagerachse (9) zumindest eine asymmetrisch angeordnete axiale Bohrung (12) ausgebildet ist, daß in der Bohrung (12) der Endbereich (14) eines eine Isolierung aufweisenden Leiterdrahts (15) angeordnet ist und daß ein freies Schenkelende der Krampe (17) die Isolierung durchsetzt und in den Leiterdraht (15) eingequetscht ist.

## Beschreibung

Die Erfindung bezieht sich auf eine Sonnenblende für Fahrzeuge mit einem Sonnenblendenkörper und einer Gegenlagerachse aus elektrisch nicht leitenden Material, die über zumindest ein elektrisches Kontaktelement verfügt.

Eine gattungsgemäße Sonnenblende ist in der DE 27 03 447 A1 gezeigt. Die Gegenlagerachse dieser bekannten Sonnenblende ist mit elektrischen Kontaktelementen versehen, dabei teleskopartig ausgebildet und besteht aus einem mittleren Kunststoffteil mit beidendig angeformten Zapfen sowie darauf angeordneten Metallhülsen, wobei zwischen dem Kunststoffteil und einer Metallhülse eine Schraubenfeder sitzt. Der Aufbau der Gegenlagerachse ist relativ aufwendig und teuer.

Bei einer anderen durch die DE 28 07 982 A1 bekanntgewordenen Sonnenblende ist die Gegenlagerachse mit einem als Kralle ausgebildeten Kontaktelement bestückt, das die Gegenlagerachse umschlingt und mit einwärts gebogenen oder gerollten Längsrändern in eine Radialnut der Gegenlagerachse eindringt und hier einen elektrischen Leiter kontaktiert. Die Herstellung und Montage des Kontaktelements hat sich als unpraktikabel und die Kontaktierung als unsicher erwiesen, so daß eine praktische Verwirklichung nicht erfolgte.

Aufgabe der Erfindung ist es, eine rationellere, einfachere, wirtschaftlichere und damit kostengünstigere Lösung für eine Sonnenblende der eingangs genannten Art aufzuzeigen.

Die Erfindung zeichnet sich zur Lösung dieser Aufgabe durch die im Anspruch 1 angegebenen Maßnahmen aus, während in den Unteransprüchen vorteilhafte Weiterbildungen der Erfindung angegeben sind.

Durch die erfindungsgemäßen Maßnahmen wird erreicht, daß weniger und standartisierbare Einzelelemente den Montageprozeß vereinfachen und zeitlich verkürzen, Qualitätsprobleme nahezu ausschalten, so daß letztlich Kontaktzonen erstellt werden können, die einfachen, soliden und zuverlässigen elektrischen Verbindungstechniken entsprechen.

Ausführungsbeispiele der Erfindung werden nachfolgend anhand der Zeichnungen näher erläutert, und es zeigen:
- Fig. 1: eine Sonnenblende in Ansicht und
- Fig. 2 - 7: Einzelheiten der Sonnenblende nach Fig. 1.

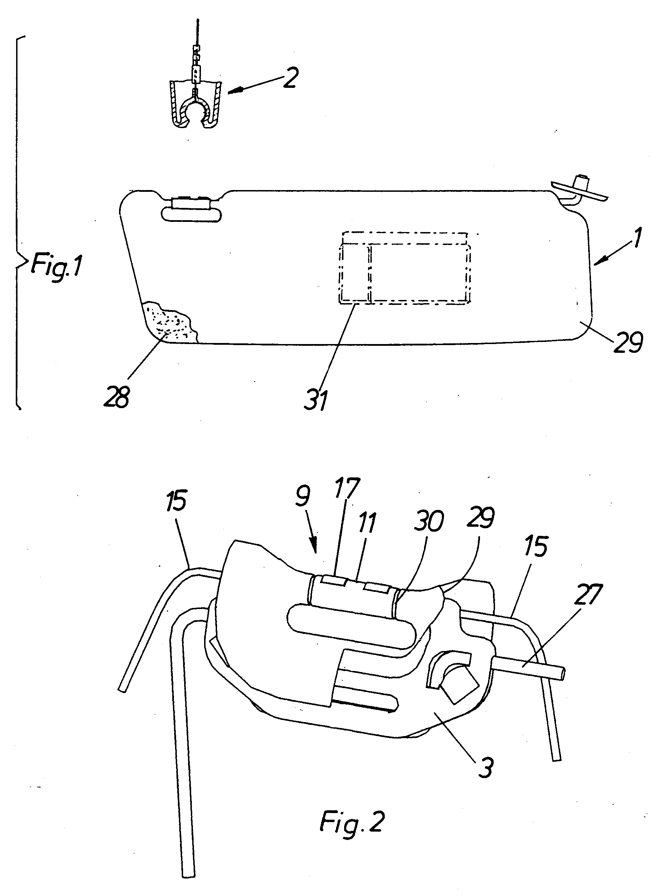

Fig 1 zeigt eine Sonnenblende mit einem Sonnenblendenkörper 1, bei der die Kontaktierung/Elektrifizierung für z. B. einen beleuchteten Make-up Spiegel 31, oder eine extern angeordnete Beleuchtung im Dachhimmel, zumindest für einen Kontakt sowie dem dazugehörigen Gegenlager 2 kontaktiert wird.

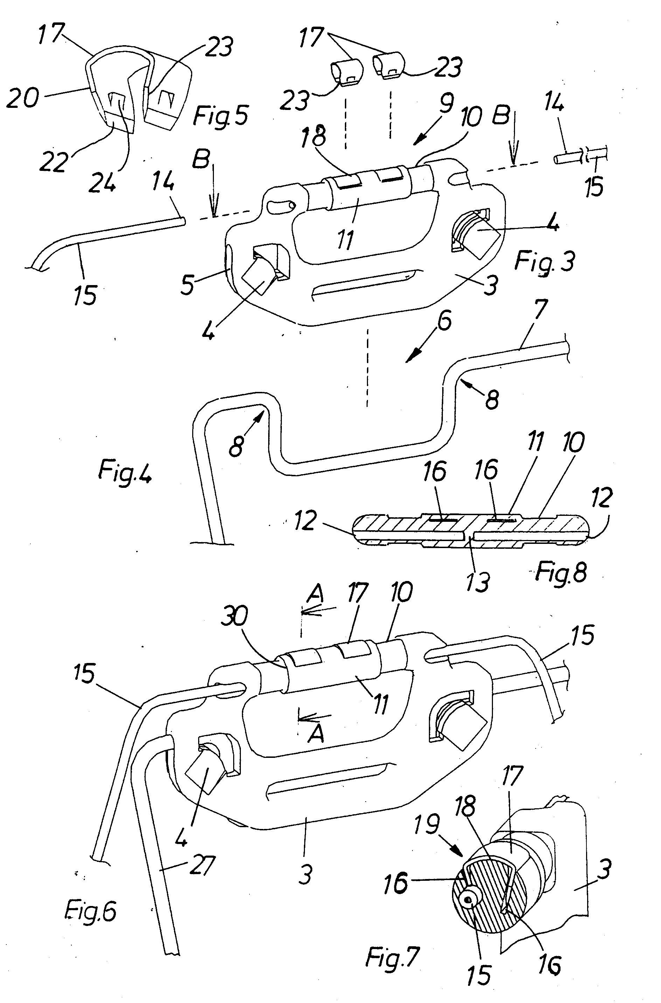

Das aus Kunststoff gespritzte Lager 3 entsprechend Fig. 3 ist symmetrisch aufgebaut, hat zwei Klipszonen 4 sowie einen Materialfreibereich 5, die maßlich abgestimmt sind mit der U-förmigen Prägung 6 des Rahmens 7 entsprechend Fig. 4. Durch Aufschieben des Lagers 3 auf die Prägung 6 entsprechend Fig. 6 wird an den Rahmenverrundungen 8 des Rahmens 7 eine Verrastung durch die Klipszonen 5 bewirkt. Denkbar und sinnvoll ist es auch, das Lager 3 an den Rahmen 7 direkt anzuspritzen, so daß die Klipszonen 4 einschließlich des Montageprozeßes des Lagers 3 entfallen. Der Rahmen 7 ist als Versteifungskörper im Sonnenblendenkörper 1 eingelagert.

Die Gegenlagerachse 9 besteht einstückig aus Zylindern 10 und 11, wobei der mittige Zylinder 11 die später sichtbare Gegenlagerachse 9 entsprechend Fig. 2 darstellt.

Die Zylinder 10 und 11 haben einen kreisförmigen Freibereich (Bohrungen bzw. Sacklöcher 12) und sind mittig des Zylinders 11 entsprechend Fig. 8 Schnitt B - B durch eine Wandung 13 voneinander getrennt.

Im zylindrischen Teil 11 sind gegenüberliegend taschenartige Schlitze 16 angebracht oder angeformt, die dazu dienen, die Kontakte, die als Krampen 17 ausgebildet sind, entsprechend Schnitt A - A Fig. 8 aufzunehmen. Ebenso hat der zylindrische Teil 11 entsprechend Fig. 3 und 7 entsprechend der Materialdicke der Krampen 17 eine maßlich abgestimmte Vertiefung 18 damit die Krampen 17 nach dieser Montage nicht am Zylinder 11 aufbauen, d. h. es wird eine Unrundheit des Querschnitts 19 vermieden.

Die die Kontakte bildenden Krampen 17 sind werkzeugfallende metallische Teile die z. B. eine Oberflächenveredelung in versilberter Ausführung haben können. Die Krampen 17 haben zwei schräg verlaufend abstehende Schenkel 20, die an ihrem Ende keilförmige messerartige Abschrägungen 22 aufweisen. Ebenso haben die Schenkel 20 an ihrer Außenkontur Abschrägungen 23 für ein besseres Einführen bzw. Montage in die taschenartigen Schlitze 16 des Zylinders 11. Darüber hinaus haben die Schenkel 20 je eine nach innen ausgestellte Verankerungs-Kralle 24, die für eine Verkrallung in den Schlitzen 16 dienen und einen festen und dauerhaften Sitz garantieren. In die Bohrungen 12 werden entsprechend Fig. 3 und 8 die nicht abisolierten Endbereiche 14 der elektrischen Leiter 15 eingeschoben, und zwar soweit, bis diese an die Wandung 13 anstoßen. Danach erfolgt die Montage der Krampen 17 derart, daß diese mit den Schenkeln 20 den Schlitzen 16 entsprechend Fig. 3 zugeführt werden, darin eintauchen und nun mit den messerartigen Abschrägungen 22 die nicht abisolierten Endbereiche 14 des elektrischen Leiters 15 partiell durchdringen und in den Leiter 15 eindringen und verquetscht werden. Damit ist die Kontaktstelle hergestellt. Bei diesem Montagevorgang der elektrischen Kontakte graben sich die Verankerungs-Krallen 24 an der Innenwand der taschenartigen Schlitze 16 ein und sichern damit den Sitz der Krampen 17. Der Montageprozeß für diese Unterbaugruppe ist damit abgeschlossen und kann je nach Planung magaziniert und bei Bedarf unter logistischen Gesichtspunkten abgerufen und bereitgestellt werden.

Die komplette Versteifungseinlage 27 wird mit den vom Kunden ausgewählten Polstermaterial 28 umgeben. Der erstellte Sonnenblendenkörper 1 wird mit Dekormaterial 29 umhüllt und mittels HF-Verschweißung rundum randlos verschweißt. Wie Fig. 2 zeigt, ist die Gegenlagerachse 9 nicht völlig mit dem Umhüllungsmaterial 29 umgeben, sondern dieses endet an der Abstufung 30. Die Schweißelektrode hat für diese Lösung eine entsprechend integrierte Vorrichtung um die Umhüllung 29 so ab- bzw. herauszutrennen, damit der Zylinder 11 mit seinen Kontakten freibleibt. Je nach Farbausstattung der Blende 1 sind die Lager 3 farblich so ausgelegt, daß keine optische Beeinträchtigung gegeben ist.

## Patentansprüche

1. Sonnenblende für Fahrzeuge mit einem Sonnenblendenkörper (1) und einer Gegenlagerachse (9) aus elektrisch nicht leitenden Material, die über zumindest ein elektrisches Kontaktelement verfügt, dadurch gekennzeichnet, daß das zumindest eine elektrische Kontaktelement als U-förmige Krampe (17) ausgebildet ist, daß die Gegenlagerachse (9) zwei radiale Schlitze (16) aufweist, in welche die Schenkel (20) der sich mit ihrem Steg auf der Gegenlagerachse (9) abstützenden Krampe (17) eingetrieben sind, daß in der Gegenlagerachse (9) zumindest eine asymmetrisch angeordnete axiale Bohrung (12) ausgebildet ist, daß in der Bohrung (12) der Endbereich (14) eines eine Isolierung aufweisenden Leiterdrahts (15) angeordnet ist und daß ein freies Schenkelende der Krampe (17) die Isolierung durchsetzt und in den Leiterdraht (15) eingequetscht ist.

2. Sonnenblende nach Anspruch 1, dadurch gekennzeichnet, daß die Gegenlagerachse (9) über zwei mit axialem Abstand nebeneinander angeordneten als Krampen (17) ausgebildeten elektrischen Kontaktelementen verfügt und daß die Sonnblendenachse (9) zwei Bohrungen (12) zur Aufnahme von jeweils einem Leiterdrahtendbereich (14) aufweist, wobei die Bohrungen (12) als Sacklöcher ausgeführt sind.

3. Sonnenblende nach Anspruch 1 oder 2, dadurch gekennzeichnet, daß die Krampenschenkel (20) mit Verankerungs-Krallen (24) ausgebildet sind.

4. Sonnenblende nach wenigstens einem der Ansprüche 1 bis 3, dadurch gekennzeichnet, daß die freien Enden der Krampenschenkel (20) angeschrägt sind.
